Europäisches Patentamt

European Patent Office

Office européen des brevets

(19)

(11) Veröffentlichungsnummer: **0 180 070**
**B1**

(12) EUROPÄISCHE PATENTSCHRIFT

(45) Veröffentlichungstag der Patentschrift:
24.05.89

(51) Int. Cl.⁴: **B 23 K 31/00, C 23 D 5/00**

(21) Anmeldenummer: 85112720.9

(22) Anmeldetag: 08.10.85

(54) Emaillierter Gegenstand und Verfahren zur Herstellung einer emaillierfähigen Schweissverbindung.

(30) Priorität: 13.10.84 DE 3437618

(43) Veröffentlichungstag der Anmeldung:
07.05.86 Patentblatt 86/19

(45) Bekanntmachung des Hinweises auf die Patenterteilung:
24.05.89 Patentblatt 89/21

(84) Benannte Vertragsstaaten:
CH DE FR GB IT LI

(56) Entgegenhaltungen:
AU-A- 11 055
DE-A- 2 034 076
DE-B- 2 559 129

SCHWEISSEN UND SCHNEIDEN, Band 23, Heft 7, 1971,
Seiten 274-277, Düsseldorf; H. BANDOW "Beitrag zum
Verbinden von Aluminium mit Kupfer durch
Elektronenstrahlschweissen

(73) Patentinhaber: Pfaudler-Werke AG, Scheffelstrasse 55,
D-6830 Schwetzingen (DE)

(72) Erfinder: Scharbach, Heinz, Jos.-Fleuchaus-Strasse 9,
D-6832 Plankstadt (DE)

(74) Vertreter: Endlich, Fritz, Dipl.-Phys.,
Postfach 1326 Blumenstrasse 8, D-8034 Germering (DE)

**Beschreibung**

Die Erfindung betrifft einen emaillierten Gegenstand, sowie ein Verfahren zur Herstellung einer emaillierfähigen Schweissverbindung zwischen zwei Bauteilen aus unterschiedlichen metallischen Trägerwerkstoffen, welches zur Herstellung des emaillierten Gegenstands verwendbar ist.

In der chemischen Technik ist es bekannt, Chemieapparateemail und hochbeständige legierte Stähle bzw. Sonderlegierungen in Kombination einzusetzen. Ein klassisches Beispiel sind Druckreaktoren. Der Behälterinnenraum wird fertigungs- und anwendungstechnisch optimal mit hochbeständigem Email über C-Stahl geschützt, während die Anforderungen an die Flanschverbindung (z.B. Nut und Feder) die Verwendung einer Sonderlegierung erforderlich machen. Letztere muss ausser einer blanken metallischen Oberfläche eine entsprechend hohe chemische Beständigkeit aufweisen. Als metallische Verbundpartner eignen sich nur solche Legierungen, welche gleiches Ausdehnungsverhalten, keine Tieftemperaturumwandlung und einen höheren Schmelzpunkt als die Einbrenntemperatur des Emails aufweisen.

Um im Übergangsbereich den unlegierten C-Stahl vor Korrosion zu schützen, wird die Emailschicht über die Nahtstelle der Basismetalle hinweggezogen und endigt auf der chemisch beständigen Legierung. Letztere besteht aus Gründen vergleichbarer Wärmeausdehnung und der geforderten hohen chemischen Beständigkeit vorzugsweise aus Ni- und/oder Co-Basislegierungen.

In der Praxis verursacht es jedoch erhebliche Schwierigkeiten, die durch übliche Schmelzschweissverfahren herzustellende Schweissverbindung zwischen zwei Bauteilen aus unterschiedlichen metallischen Trägerwerkstoffen derart herzustellen, dass die Oberflächen der Schweissnähte derart emaillierfähig sind, dass die Emailschicht in diesem Bereich auch bei verhältnismässig hohen chemischen und physikalischen Beanspruchungen korrosionsbeständig ist, welche Beanspruchungen beispielsweise bei Druckreaktoren auftreten.

Zur Herstellung eines mit einer Glasauskleidung versehenen Flanschrohrs ist es ferner bekannt (Au-A-11055), einen Flansch mit dem Ende eines Stahlrohrs in üblicher Weise zu verschweissen und nach dem Einbrennen einer Grundschicht aus Email einen vorgefertigten Glasring in eine zentrale Ausnehmung des Flanschs einzusetzen und mit der Grundschicht zu verschmelzen. Mit diesem bekannten Verfahren ist es deshalb nicht ohne weiteres möglich, Schwierigkeiten der genannten Art zu vermeiden.

Es ist deshalb Aufgabe der Erfindung, einen emaillierten Gegenstand und ein Verfahren zur Herstellung einer emaillierfähigen Schweissverbindung zwischen zwei Bauteilen aus unterschiedlichen metallischen Trägerwerkstoffen derart zu verbessern, dass eine verbesserte Emaillierfähigkeit und erhöhte Korrosionsbeständigkeit im Bereich der Schweissverbindung erzielt werden kann.

Diese Aufgabe wird erfindungsgemäss bei einem emaillierten Gegenstand entsprechend dem Gegenstand des Patentanspruchs 1 und bei einem Verfahren entsprechend dem Gegenstand des Patentanspruchs 4 gelöst. Vorteilhafte Weiterbildungen der Erfindung sind Gegenstand der betreffenden Unteransprüche.

Der Erfindung liegt die Erkenntnis zugrunde, dass bei Durchführung eines derartigen Verfahrens die Emaillierfähigkeit verbessert werden kann, weil eine Gefährdung für die die Nahtstelle überbrückende Emailschicht vor allem dann auftritt, wenn im Tripelpunkt Metall A/Metall B/Email die aus Metall A und B im Schweissbad gebildete Aufmischungszone eine bestimmte Breite (Masse) übersteigt. Fehlerauslösend können dann Mischkristallphasen sein, die sich im Konzentrationsgefälle Metall A – Metall B zwangsläufig bilden und deren $\gamma/\alpha$-Gefügeumwandlung sich im Tieftemperaturbereich vollzieht. Dies ist beispielsweise im Schweissverbund Kohlenstoffstahl-Nickelbasislegierung der Fall, wie das Eisen-Nickel-Phasendiagramm ausweist (Houdremont I, 3. Auflage, Seiten 549–555 und 606–610). Übersteigt die in ihrem physikalischen Verhalten von A und B abweichende Mischkristallphase ein kritisches Volumen, ist sie in der Lage Fliessvorgänge auszulösen, welche die Emailschicht im Tripelpunkt beschädigen.

Zur Durchführung des Verfahrens gemäss der Erfindung finden deshalb vorzugsweise Elektronenstrahl-, Laser- oder Spreng-Schweissverfahren Verwendung, da durchgeführte Versuche gezeigt haben, dass für den interessierenden Zweck derartige Verfahren als praktisch vermischungsfrei bezeichnet werden können. Es sind jedoch auch andere Schweissverfahren mit verhältnismässig geringer Aufmischung verwendbar, wie beispielsweise Heissdrahtplasma-, Reib- oder Press-Schweissverfahren.

Anhand der Zeichnung soll die Erfindung beispielsweise näher erläutert werden. Es zeigen:

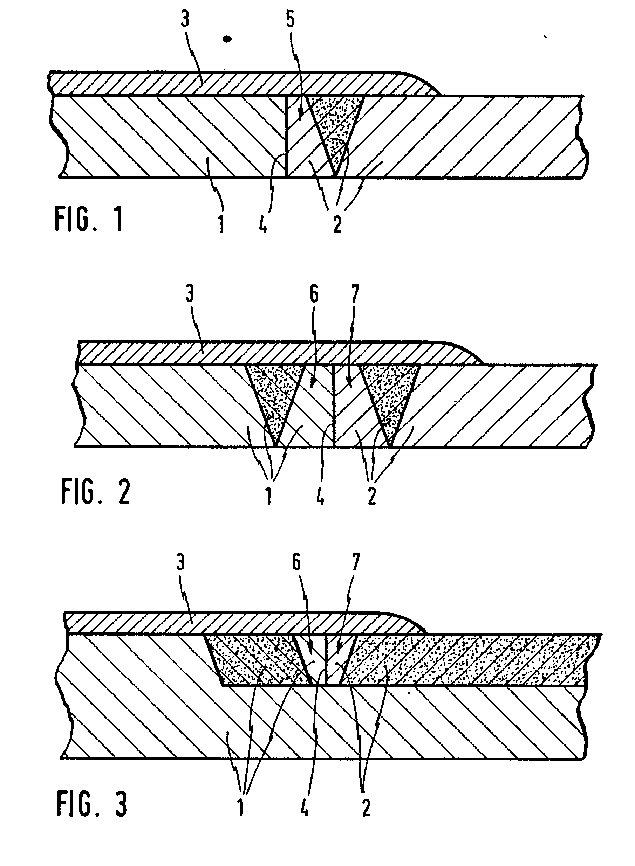

Fig. 1 bis 3 Schnittansichten durch Schweissverbindungen zwischen zwei Bauteilen, wobei die Schweissverbindungen unterschiedlich ausgebildet sind.

Die in Fig. 1 bis 3 dargestellten Schweissverbindungen zwischen zwei Bauteilen betreffen einen Flanschring, wobei der erste Bauteil ein an einem Behälter ausgebildeter Flanschstutzen aus einem ersten Trägerwerkstoff 1 ist, der aus einem Kohlenstoffstahl hergestellt ist. Der zweite Bauteil ist ein damit zu verschweissender Flanschring aus einem zweiten emaillierfähigen Trägerwerkstoff 2, der aus einer Nickelbasislegierung wie Inconel oder Hastelloy besteht. Die Oberfläche der beiden verschweissten Bauteile wird in mehreren Brennfahrten mit einer Emailschicht 3 versehen. Im folgenden soll ferner davon ausgegangen werden, dass die zumindest angenähert vermischungsfreie Schweissverbindungsfläche 4 mit Hilfe eines Elektronenstrahl-Schweissverfahrens hergestellt wird, während die punktiert dargestellten Schweissnähte durch ein normales Schmelzschweissverfahren hergestellt werden.

Bei dem in Fig. 1 dargestellten Ausführungsbeispiel wird davon ausgegangen, dass der erste Bauteil mit dem Behälterstutzen aus dem ersten Werkstoff 1 in einer Vakuumkammer angeordnet werden kann, in der ein Verschweissen mit einem ringförmigen Zwischenstück 5 zur Ausbildung der vermischungsfreien Schweissverbindungsfläche 4 erfolgen kann. Die Verbindung mit dem zweiten Bauteil erfolgt anschliessend ausserhalb der Vakuumkammer durch Anwendung eines normalen Schmelzschweissverfahrens. Es ist deshalb nicht erforderlich, dass die Vakuumkammer so gross sein muss, dass die beiden miteinander zu verschweissenden Bauteile in der Vakuumkammer angeordnet werden können. Wenn jedoch die beiden Bauteile aus den beiden Trägerwerkstoffen 1, 2 so klein sind, dass sie beide in der Vakuumkammer angeordnet werden können, ist die Verwendung eines Zwischenstücks 5 nicht erforderlich, da dann die äussere Ringfläche des Bauteils aus dem ersten Trägerwerkstoff 1 mit einer entsprechend ausgebildeten inneren Ringfläche des zweiten Bauteils aus dem Trägerwerkstoff 2 zur Ausbildung der Schweissverbindungsfläche 4 durch einen Elektronenstrahl direkt miteinander verschweisst werden können.

Das zweite Ausführungsbeispiel betrifft den Fall, dass beide Bauteile so gross sind, dass keiner der beiden Bauteile in der Vakuumkammer angeordnet werden kann, um ihn mit einem Zwischenstück mit einer vermischungsfreien Schweissverbindungsfläche 4 zu verschweissen. In einem derartigen Fall wird zunächst ein aus zwei ringförmigen Teilen 6, 7 bestehendes Zwischenstück in der Vakuumkammer durch Elektronenstrahlverschweissung hergestellt, um die Schweissverbindungsfläche 4 herzustellen. Der eine Teil 6 besteht aus dem ersten Trägerwerkstoff 1 und der andere Teil 7 aus dem zweiten Trägerwerkstoff 2. Das Verschweissen mit den beiden Bauteilen kann dann ohne weiteres mit einem üblichen Schmelzschweissverfahren erfolgen.

Bei dem in Fig. 3 dargestellten Ausführungsbeispiel wird ebenfalls zunächst ein Zwischenstück aus den beiden Teilen 6, 7 hergestellt, die miteinander durch Elektronenstrahlschweissung verbunden werden, um die Schweissverbindungsfläche 4 herzustellen. Dieses Ausführungsbeispiel betrifft den Fall, dass auf einer Ausnehmung des ersten Bauteils aus dem ersten Trägerwerkstoff 1 eine Auftragschweissung aus dem zweiten Werkstoff 2 hergestellt werden soll, um beim Verschweissen mit dem Zwischenstück gleichzeitig den zweiten Bauteil zu bilden. Vor Durchführung der Auftragschweissung wird das aus den beiden Teilen 6, 7 zusammengeschweisste Zwischenstück in der aus Fig. 3 ersichtlichen Lage auf die Oberfläche der Ausnehmung in dem ersten Bauteil aufgelegt, so dass ohne weiteres die Auftragschweissung auf beiden Seiten des Zwischenstücks durchgeführt werden kann. Nach der Auftragschweissung wird dann die Schweissoberfläche abgeschliffen, so dass die Emailschicht 3 eingebrannt werden kann.

Alle beschriebenen Ausführungsbeispiele weisen das gemeinsame Merkmal auf, dass auf der einen Seite der vermischungsfreien Schweissverbindungsfläche 4 nur Metall des einen Trägerwerkstoffs 1 vorhanden ist und dass auf der anderen Seite der Schweissverbindungsfläche nur Metall des anderen Trägerwerkstoffs 2 vorhanden ist, da bei Durchführung des normalen Schmelzschweissverfahrens Schweissgut aus dem betreffenden Metall aufgetragen wird, so dass ohne weiteres die Bedingung erfüllt werden kann, dass auf der einen Seite der Schweissverbindungsfläche 4 nur Metall des einen und auf der anderen Seite nur Metall des anderen Trägerwerkstoffs vorhanden ist.

Bei Verwendung eines einteiligen und insbesondere bei Verwendung eines zweiteiligen Zwischenstücks ergibt sich der Vorteil, dass eine kostensparende Herstellung der Schweissverbindungsfläche in einer verhältnismässig kleinen Vakuumkammer möglich ist. Wenn bei dem Hersteller von emaillierten Apparaten keine Anlage zur Durchführung eines Elektronenstrahlschweissverfahrens vorhanden ist, kann er das zweiteilige Zwischenstück auch bei einem Hersteller anfertigen lassen, der über eine derartige Anlage verfügt. Die Verwendung eines mit einem vermischungsfreien Schweissverfahren vorab gefertigten Zwischenstücks hat ausserdem den Vorteil, vor seinem Einbringen zur Qualitätskontrolle für alle Prüfverfahren von allen Seiten zugänglich zu sein.

**Patentansprüche**

1. Emaillierter Gegenstand, dadurch gekennzeichnet, dass der Gegenstand einen Träger (1, 2) aufweist, der mindestens zwei unterschiedliche emaillierfähige Metalle enthält, die miteinander durch eine Schweissnaht (4) verbunden sind, wobei zumindest angenähert keine Vermischung der unterschiedlichen Metalle vorhanden ist und die Metalle und die Schweissnaht von einer Emailschicht (3) überzogen sind.

2. Gegenstand nach Anspruch 1, dadurch gekennzeichnet, dass der Träger ein Zwischenstück (6, 7) aufweist, das im wesentlichen aus den unterschiedlichen Metallen besteht, die durch ein Elektronenstrahl-, Laser- oder Spreng-Schweissverfahren zusammengeschweisst sind, und dass das Zwischenstück auf gegenüberliegenden Oberflächen mit Hilfe eines konventionellen Verfahrens mit zusätzlichem Metall verschweisst ist, das eine Zusammensetzung aufweist, die gleichartig mit der Zusammensetzung der Oberfläche des Zwischenstücks ist, mit dem es verschweisst wird.

3. Gegenstand nach Anspruch 1, dadurch gekennzeichnet, dass der Träger ein Zwischenstück (6, 7) aufweist, das im wesentlichen aus den beiden unterschiedlichen Metallen besteht, die durch ein Elektronenstrahl-, Laser- oder Spreng-Schweissverfahren miteinander verschweisst sind, um ein Zwischenstück zu bilden, das gegenüberliegende Seitenflächen mit unterschiedlichen Zusammensetzungen und eine nicht vermischte Zwischenschicht aufweist, dass die eine Seitenfläche des Zwischenstücks mit einem ersten metallischen Element, dessen Zusammensetzung der seitlichen Oberfläche entspricht, durch ein erstes Schweissmaterial verschweisst ist, das ebenfalls eine Zusammensetzung entsprechend derjenigen der ersten Seitenfläche aufweist, dass die zweite Seitenfläche durch Verschweissen mit einem zweiten Schweissmaterial verbunden ist, das eine Zusammensetzung entsprechend derjenigen der zweiten Seitenfläche aufweist, dass die Trägeroberfläche eine Oberfläche des ersten Elements, eine Oberfläche des ersten Schweissmaterials, eine Endfläche des Zwischenstücks und eine Oberfläche des zweiten Schweissmaterials aufweist, und dass das erste Element sich unter dem ersten Schweissmaterial, dem Zwischenstück und dem zweiten Schweissmaterial erstreckt.

4. Verfahren zur Herstellung einer emaillierfähigen Schweissverbindung zwischen zwei Bauteilen aus unterschiedlichen metallischen Trägerwerkstoffen, dadurch gekennzeichnet, dass eine zumindest angenähert vermischungsfreie Schweissverbindungsfläche (4) zwischen dem einen Bauteil und einem Zwischenstück (5) aus dem Metall des anderen Trägerwerkstoffs derart ausgebildet wird, dass auf der einen Seite der Schweissverbindungsfläche nur Metall des einen Trägerwerkstoffs (1) und auf deren anderen Seite nur Metall des anderen Trägerwerkstoffs (2) vorhanden ist, und dass danach die Herstellung der Schweissverbindung zwischen den beiden Bauteilen durch ein konventionelles Schmelzschweissverfahren durchgeführt wird, bei dem Schweissgut aus dem Metall des anderen Trägerwerkstoffs aufgetragen wird.

5. Verfahren zur Herstellung einer emaillierfähigen Schweissverbindung zwischen zwei Bauteilen aus unterschiedlichen metallischen Trägerwerkstoffen, dadurch gekennzeichnet, dass eine zumindest angenähert vermischungsfreie Schweissverbindungsfläche (4) zwischen zwei Teilen (6, 7) eines Zwischenstücks, von dem der eine Teil (6) aus dem Metall des einen und der andere Teil (7) aus dem Metall des anderen Trägerwerkstoffs besteht, derart ausgebildet wird, dass auf der einen Seite der Schweissverbindungsfläche nur Metall des einen Trägerwerkstoffs (1) und auf der anderen Seite nur Metall des anderen Trägerwerkstoffs (2) vorhanden ist, und dass danach die Herstellung von Schweissverbindungen zwischen dem Zwischenstück und den beiden Bauteilen durch ein konventionelles Schmelzschweissverfahren durchgeführt wird, bei dem Schweissgut aus dem Metall des einen beziehungsweise des anderen Trägerwerkstoffs aufgetragen wird.

6. Verfahren nach Anspruch 5, dadurch gekennzeichnet, dass das Zwischenstück (6, 7) auf eine Oberfläche des einen Bauteils aufgelegt wird, und dass dessen eine Seitenfläche durch eine Auftragschweissung aus dem einen Metall mit dem einen Bauteil verbunden wird und die andere Seitenfläche durch eine Auftragschweissung aus dem anderen Metall verbunden wird, um gleichzeitig den zweiten Bauteil zu bilden.

7. Verfahren nach einem der Ansprüche 4 bis 6, dadurch gekennzeichnet, dass die vermischungsfreie Schweissverbindungsfläche (4) durch ein Elektronenstrahl-, Laser- oder Spreng-Schweissverfahren hergestellt wird.

**Revendications**

1. Objet émaillé, caractérisé en ce que cet objet présente un support (1, 2) qui contient au moins deux métaux différents capables d'être émaillés et qui sont réunis l'un avec l'autre par un joint de soudure (4), aucun mélange des métaux différents n'existant au moins approximativement et les métaux et le joint de soudure étant revêtus d'une couche d'émail (3).

2. Objet selon la revendication 1, caractérisé en ce que le support présente une pièce intermédiaire (6, 7) qui est constituée essentiellement des métaux différents qui sont soudés ensemble par un procédé de soudage à rayonnement électronique, à laser ou à explosion, et en ce que la pièce intermédiaire est soudée sur des surfaces se faisant face à l'aide d'un procédé classique avec un métal additionnel, qui présente une composition qui est du même type que la composition de la surface de la pièce intermédiaire avec laquelle il est soudé.

3. Objet selon la revendication 1, caractérisé en ce que le support présente une pièce intermédiaire (6, 7) qui est constituée essentiellement des deux métaux différents qui sont soudés l'un à l'autre par un procédé à rayonnement électronique, à laser ou à explosion pour former une pièce intermédiaire qui présente des faces latérales opposées ayant des compositions différentes et une couche intermédiaire non mélangée, en ce que l'une des faces latérales de la pièce intermédiaire est soudée à un premier élément métallique, qui correspond par sa composition à la surface latérale, par l'intermédiaire d'une première matière de soudage qui présente également une composition correspondant à celle de la première face latérale, en ce que la deuxième face latérale est reliée par soudage à une deuxième matière de soudage qui présente une composition correspondant à celle de la deuxième face latérale, en ce que la surface de support présente une surface du premier élément, une surface de la première matière de soudage, une face terminale de la pièce intermédiaire et une surface de la deuxième matière de soudage, et en ce que le premier élément s'étend sous la première matière de soudage, la pièce intermédiaire et la deuxième matière de soudage.

4. Procédé pour fabriquer une liaison par soudage capable d'être émaillée entre deux composants en des matières de support métalliques différentes, caractérisé en ce qu'on réalise une face de liaison par soudage (4) au moins approximativement exempte de mélange entre l'un des composants et une pièce intermédiaire (5) en métal de l'autre matière de support, en ce que sur l'un des côtés de la face de liaison de soudage il n'y a que du métal de l'une des matières de support (1) et sur l'autre côté il n'y a que du métal de l'autre matière de support (2), et en ce qu'ensuite la fabrication de la liaison par soudage entre les deux composants est réalisée par un procédé classique de soudage par fusion dans lequel la soudure du métal de l'autre matière de support est appliquée.

5. Procédé pour fabriquer une liaison par soudage capable d'être émaillée entre deux composants de matières de support métalliques différentes, caractérisé en ce qu'on réalise une face de liaison par soudage (4) au moins approximativement exempte de mélange entre deux pièces (6, 7) d'une pièce intermédiaire dont une pièce (6) est constituée par le métal d'une matière de support et l'autre pièce (7) est constituée par le métal de l'autre matière de support, en ce que sur l'un des côtés de la face de liaison par soudage il n'y a que du métal de la première matière de support (1) et sur l'autre côté il n'y a que du métal de l'autre matière de support (2), et en ce qu'ensuite la fabrication des liaisons par soudage entre la pièce intermédiaire et les deux composants est réalisée par un procédé classique de soudage par fusion dans lequel on applique la soudure du métal de l'une ou l'autre matière de support.

6. Procédé selon la revendication 5, caractérisé en ce que la pièce intermédiaire (6, 7) est appliquée sur une surface de l'un des composants et en ce que l'une de ses faces latérales est reliée par un soudage d'application de l'un des métaux audit composant et l'autre face latérale est reliée par un soudage d'application de l'autre métal pour former simultanément le deuxième composant.

7. Procédé selon l'une des revendications 4 à 6, caractérisé en ce que la face de liaison par soudage (4) exempte de mélange est fabriquée par un procédé de soudage à rayonnement électronique, à laser ou à explosion.

**Claims**

1. An enamelled object, characterised in that the object has a carrier (1, 2) containing at least two different metals capable of being enamelled which are interconnected by a weld (4), there being at least approximately no intermixing of the different metals, and the metals and the weld being coated by an enamelled layer (3).

2. An object according to claim 1, characterised in that the carrier has an intermediate part (6, 7) consisting in essence of the two different metals which are welded together by means of an electron beam welding process, a laser welding process or an explosion welding process, and in that the intermediate part is welded together on opposite surfaces by means of a conventional process with an additional metal having a composition homogeneous with the composition of the surface of the intermediate part wherewith it is welded together.

3. An object according to claim 1, characterised in that the carrier has an intermediate part (6, 7) which consists in essence of the two different metals which are welded together by means of an electron beam welding process, a laser welding process or an explosion welding process, to form an intermediate part having opposite side surfaces with different compositions and an unmixed intermediate layer, that the one side surface of the intermediate part is welded together with a first metallic element the composition whereof corresponds to the side surface, by means of a first welding material also having a composition corresponding to that of the first side surface, that the second side surface is bonded by welding with a second welding material having a composition corresponding to that of the – second side surface, that the carrier surface has a surface of the first element, a surface of the first welding material, and end surface of the intermediate part and a surface of the second welding material, and that the first element extends beneath the first welding material, the intermediate part and the second welding material.

4. A method for producing a welded joint capable of being enamelled, between two components made of different metallic carrier materials, characaerised in that at least one welded joint surface (4) approximately free of any mixture is formed between the one component and an intermediate part (5) made out of the metal of the other carrier material in such a way that on the one side of the welded joint surface there is located only the metal of the one carrier material (1), and on its other side, only the metal of the other carrier material (2), and that subsequently the welded joint between the two components is made by means of a conventional fusion welding process wherein one applies a weld deposit from the metal of the other carrier material.

5. A method for producing a welded joint capable of being enamelled, between two components made of different metallic carrier materials, characterised in that at least one welded joint surface (4) approximately free of any mixture is formed in such a way between two parts (6, 7) of an intermediate part, the one part (6) whereof, consisting of the metal of the one carrier material, and the other part (7), of the metal consisting of the other carrier material, so that on the one side of the welded joint surface there is located only the metal of the one carrier material (1), and on the other side, only the metal of the other carrier material (2), and that subsequently the welded joints between the intermediate part and the two components are made by means of a conventional fusion welding process wherein one applies a weld deposit from the metal of the one carrier material or the other respectively.

6. A method according to claim 5, characterised in that the intermediate part (6, 7) is applied to a surface of the one component and that one side surface thereof is joined to the one component by a deposit weld from the one metal and that the other side surface is joined by a deposit weld from the other metal, so as to form the second component at the same time.

7. A method according to one of claims 4 to 6, characterised in that the welded joint (4) free of any mixture, is produced by means of an electron beam welding process, a laser welding process or an explosion welding process.

1/1

FIG. 1

3    5    1    4    2

FIG. 2

3    6    7    1    4    2

FIG. 3

3    6    7    1    4    2